# EUROPEAN PATENT SPECIFICATION

(11) **EP 3 706 968 B1**
(45) Date of publication and mention of the grant of the patent: **18.06.2025**
(21) Application number: 18799770.5
(22) Date of filing: 08.11.2018
(51) Int. Cl.: B26D 7/06, B26D 1/22, B26D 5/00, B26D 5/06, B26D 7/26, B26D 1/03, B26D 1/36, B26D 1/44, B26D 3/26, B26D 11/00, B26D 1/00, A47J 43/20, B26D 3/28

(54) **A FOOD PROCESSING APPARATUS**
NAHRUNGSVERARBEITUNGSVORRICHTUNG
APPAREIL DE TRANSFORMATION D'ALIMENTS

(30) Priority: 08.11.2017 GB 201718456
(43) Date of publication of application: 16.09.2020
(73) Proprietor: Donaghy Engineering Ltd., Dungannon, Tyrone BT71 6HX (GB)
(72) Inventor: DONAGHY, Stephen, Dungannon, Tyrone BT71 6HX (GB)
(74) Representative: Mathys & Squire
(86) International application number: PCT/EP2018/080562
(87) International publication number: WO 2019/092076

(56) References cited:
- EP-A1- 3 079 528
- US-A- 4 062 260
- US-A1- 2002 029 673
- US-A1- 2006 123 639
- US-A1- 2009 078 100
- US-A1- 2016 107 325

## Description

### Field of the Invention

This invention relates to a food processing apparatus, and in particular to an apparatus for cutting foodstuff into predetermined shapes and sizes.

### Background of the invention

It is often desirable to shape or size items of food in order that they are more easily consumed, more palatable, can be processed more easily, or are just more aesthetically pleasing. In the most basic sense this can be achieved by simply manually slicing a food item, such as a vegetable item, to create the desired shape or size. Whilst this is suitable for simple shapes and low volume, for more complicated shapes or higher volume applications, manual cutting is not practical.

Devices exist which automate the process of shaping and sizing, for example, vegetables.

These devices come in a variety of forms. One such device comprises a grid like cutting implement, the vegetable being forced through the grid with the aid of an attached lever or ram, slicing the vegetable along the gridlines. Other implements mount the vegetable therein and utilise a spinning motion to shear a portion of the outer surface creating a spiral shaped portion of vegetable. There also exists commercial devices comprising a drum into which a plurality of vegetable items are placed, the drum having an opening to a blade and rotating such that portions of the vegetables become exposed to the aperture and the blade and as such are sliced. The shape of the vegetable in this case being determined by the configuration of the aperture and the blade. US-A1-2016/107325 describes a cutting device for cutting twisted-shape food pieces.

From US 2016/107325 A1 there is known a food processing apparatus for the cutting of foodstuff comprising a guide having an open first end and a second end; a primary cutter located at or proximal the open first end of the guide and at least one secondary cutter located at or proximal the second end of the guide, distal the first end; wherein the guide is configured to guide foodstuff cut by the primary cutter towards and into contact with the at least one secondary cutter for further cutting and/ or processing by the at least one secondary cutter such that the foodstuff passed through the at least one secondary cutter is shaped to a predetermined shape, wherein the at least one secondary cutter comprises a cutting blade, wherein the blade of the at least one secondary cutter is configured for cutting the foodstuff such that the foodstuff is shaped to the predetermined shape. From US 2016/107325 A1 there is also known a method of cutting a foodstuff comprising forcing the foodstuff through a primary cutter such that the cut foodstuff is sized for passing into a guide, encouraging the cut foodstuff to travel along the guide and into contact with at least one secondary cutter such that the cut foodstuff is further cut and/or processed and/or shaped by the at least one secondary cutter.

What all of the current devices have in common is a limitation on the shape which can be created from the food item. Simply forcing a vegetable through a two dimensional die or grid, or removing generally parallel slices from a food item, limits the variety and complexity of shape that can be produced.

Moreover, many of the available devices create a significant amount of wastage, and suffer from jamming or clogging due to waste portions of food becoming lodged therein.

It is the object of the present invention to provide for the shaping and sizing of foodstuff in a manner which minimises waste and provides flexibility in terms of the shapes that may be created.

### Summary of the invention

Aspects and embodiments of the invention are set out in the appended claims.

According to the invention there is provided a food processing apparatus for the cutting of foodstuff according to claim 1. Embodiments useful for understanding the invention are also disclosed.

A primary cutting means may be configured to cut the foodstuff such that it is sized to pass into the guide means.

Preferably, the primary cutting means defines a cutting area and is configured to minimise wastage of the foodstuff and/or prevent clogging by aligning all parts of the foodstuff cut within the cutting area with at least a portion of the guide means into which the cut foodstuff passes.

Advantageously, all of the foodstuff cut within the cutting area passes into the guide means and is thereafter processed by the secondary cutting means, resulting in minimal wastage and preventing cut portions of foodstuff clogging any portion of the apparatus.

Ideally, the guide means comprises a plurality of guide members, each guide member having at least a portion of the primary cutting means locatable at an open first end.

Preferably, the portion of the primary cutting means locatable at the first end of each guide member defines an aperture for passing cut foodstuff into the open first end of the guide member.

Ideally, the aperture defined by the primary cutting means is alignable with an opening of the open first end of the guide member.

Preferably, at least a portion of the primary cutting means is alignable with and projects from the periphery of the open first end of each guide member.

Advantageously, as each guide member has a portion of primary cutting means alignable around its periphery, any foodstuff forced towards the guide member will be cut by the portion of primary cutting means alignable therewith and will resultantly pass into the guide member.

Ideally, the primary cutting means is a one piece cutting means comprising a plurality of cutting members formed integrally thereof.

Alternatively, the primary cutting means comprises a plurality of cutting members joinable to form the primary cutting means.

Preferably, the plurality of cutting members form the primary cutting means such that no gaps exist between adjacent cutting members.

Preferably, the primary cutting means comprises a tessellated cutting means.

Ideally, the primary cutting means comprises a tessellated arrangement of cutting members.

Advantageously, the tessellated nature of the primary cutting means results in a cutting arrangement providing guide member apertures alignable with the opening of the guide members, but having no gaps between these guide member apertures.

Further advantageously, as foodstuff is forced onto the primary cutting means, all of the foodstuff is cut and passed into one or more guide members as no alternative gaps exist between the tessellated arrangement of cutting members, thus wastage and clogging is greatly reduced or eliminated.

Preferably, the primary cutting means comprises a tessellated arrangement of hexagonal cutting members.

Alternatively, the cutting members forming the tessellated arrangement of the primary cutting members can be of any shape suitable for tessellation.

Ideally, the cutting members forming the tessellated arrangement of the primary cutting means are uniformly shaped and sized cutting members.

Alternatively, cutting members of varying shapes and sizes are combined to form a tessellated arrangement.

Preferably, the cutting members are of either regular shape, irregular shape, or a mixture of regular and irregular shapes, but when combined form a primary cutting means which comprises no gaps between adjacent cutting members.

Ideally, the cutting members are of either polygonal shape , non-polygonal shape, or a mixture of polygonal and non-polygonal shapes, but when combined form a primary cutting means which comprises no gaps between adjacent cutting members.

Preferably, each of the guide members comprises a cutting member of the primary cutting means projecting therefrom.

Ideally, the cutting members have a cutting end locatable distal the end of the cutting members closest the guide members.

Preferably, the cutting members adjoin at least at their cutting end to form a tessellated cutting arrangement.

Ideally, the primary cutting means is formed integrally of the guide means.

Alternatively, the primary cutting means is attachable to the guide means.

Ideally, the primary cutting means cuts the foodstuff such that it is a suitable size and/or shape for further cutting and/or processing by the secondary cutting means.

Preferably, the guide members each comprise a tube, pipe, or other such conduit suitable for conveying foodstuff.

Preferably, the apparatus comprises a plurality of secondary cutting means.

Ideally, each guide member comprises its own secondary cutting means.

The secondary cutting means comprises a means for cutting the foodstuff such that the foodstuff is shaped to a predetermined shape.

Ideally, the predetermined shape is a generally rectangular cuboid, twisted generally rectangular cuboid, spiral, or any other such shape desired by a user.

Ideally, the predetermined shape is of square, pentagon, hexagon, septagon, or heart cross-sectional shape.

The secondary cutting means is a rotatable cutting means.

Ideally, the secondary cutting means comprises a die for shaping the foodstuff..

The secondary cutting means comprises a cutting blade.

Ideally, the cutting blade of the secondary cutting means is a blade arrangement.

The cutting blade of the secondary cutting means has a sweep and/or taper which encourages movement of the foodstuff through the cutting blade.

The cutting blade of the secondary cutting means has a sweep and/or taper which encourages rotation of the cutting blade as the foodstuff passes through the cutting blade.

Preferably, the secondary cutting means comprises a bearing, the cutting blade of the secondary cutting means being operably mountable within the bearing.

Alternatively, the secondary cutting means comprises a bushing, the cutting blade of the secondary cutting means being operably mountable within the busing.

Ideally, the secondary cutting means comprises a bearing housing, the bearing being operably mountable within the bearing housing.

Preferably, the secondary cutting means are locatable within, attachable to, or mountable on the second end of the guide members.

Alternatively, the secondary cutting means are mountable within an end plate arrangement, the end plate arrangement being locatable at the second end of the guide means.

Ideally, the end plate arrangement comprises a plurality of end plates, each end plate having a secondary cutting means mountable therein.

Preferably, the plurality of end plates are layered such that they form a layered end plate arrangement.

Ideally, the bearing is configured to permit rotation of the secondary cutting means.

Preferably, the guide members extend at an angle from their first ends closest the primary cutting means towards their second ends closest the secondary cutting means.

Preferably, the guide members diverge from their first ends closest the primary cutting means towards their second ends.

Ideally, the guide members extend at an angle such that at least a portion of the first ends thereof are adjoining and the second ends thereof are separated from each other.

Advantageously, the divergence of the guide means and resulting separation at their second ends provides sufficient space between the guide means at their second ends such that a secondary cutting means, including associated bearing, can be mounted to each guide means.

Further advantageously, whilst the separation created by the divergence of the guide means permits space for mounting the secondary cutting means, including associated bearing, to the second end of the guide members, it also permits the apparatus to maintain a reduced overall cross-sectional area at least at the first end of the apparatus.

Ideally, at least some of the guide members differ in length from each other.

Preferably, the guide members are generally aligned at their first end, any differences in length of the guide members resulting in a staggered arrangement at the second ends of the guide members.

Ideally, the length of each guide member and spacing between the guide members at their second ends is configured to accommodate the mounting of a secondary cutting means thereto.

Advantageously, the differing lengths of the guide members permits the mounting of a secondary cutting means, with associated bearing, to each guide means, whilst maintaining a reduced cross-sectional area.

Alternatively, the secondary cutting means are locatable within the guide means.

Ideally, the secondary cutting means is an interchangeable secondary cutting means such that different secondary cutting means having different shaped cutting blades or blade arrangements can be removably mounted to the second end of the guide members to impart different predetermined shapes on the foodstuff.

Ideally, the secondary cutting means are free running cutting means.

The secondary cutting means is rotatably driven by the foodstuff as the foodstuff is forced through the secondary cutting means.

According to the invention there is provided a method of cutting a foodstuff according to claim 12.

### Brief description of the drawings

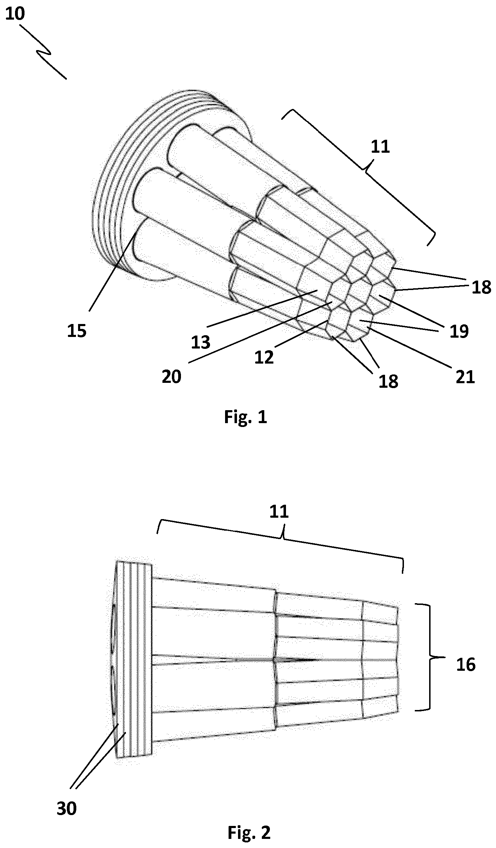

Figure 1 is a perspective view of a food processing apparatus according to the invention;
Figure 2 is a side view of a food processing apparatus according to the invention;

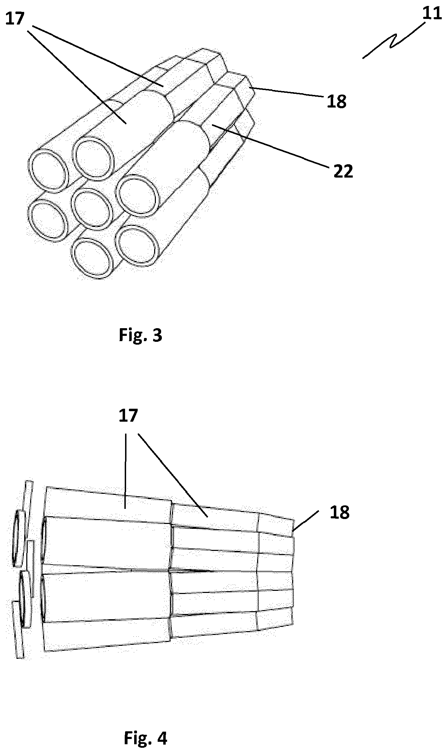

Figure 3 is a perspective view of a guide means of a food processing apparatus according to the invention, showing the primary cutting means;
Figure 4 is a side view of a guide means of a food processing apparatus according to the invention, showing the primary cutting means;
Figure 5 is a view from a second end of a food processing apparatus according to the invention showing features internally of the guide means;
Figure 6 is a sectional view through section G-G of figure 5;
Figure 7 is a perspective view of a secondary cutting means according to the invention showing a bearing;
Figure 8 is a side view of a secondary cutting means according to the invention showing a bearing;
Figure 9 is a top view of a secondary cutting means according to the invention showing a bearing;
Figure 10 is a side view of a second embodiment of the invention showing a staggered arrangement at a second end of the food processing apparatus;
Figure 11 is a top view of a variety of secondary cutting blades for a secondary cutting means according to the invention; and
Figure 12 is a top view of a further variety of secondary cutting blades for a secondary cutting means according to the invention.

### Detailed Description of the drawings

The present teaching will now be described with reference to an exemplary food processing apparatus for the cutting of foodstuff. It will be understood that the exemplary food processing apparatus is provided to assist in an understanding of the present teaching and are not to be construed as limiting in any fashion.

Referring now to the accompanying drawings, there is illustrated a food processing apparatus for the cutting of foodstuff 10 having a guide arrangement 11. A primary cutter 12 is located at an open first end 13 of the guide arrangement 11. A secondary cutter 14 is located at or about a second end 15 of the guide arrangement 11 distal the first end 13. The guide arrangement 11 guides foodstuff (not shown) cut by the primary cutter 12 towards and into contact with the secondary cutter 14 for further cutting and/or processing by the secondary cutter 14. The primary cutter 12 cuts the foodstuff such that it is sized to pass into a portion of the guide arrangement 11, and such that it is a suitable size and/or shape for further cutting and/or processing by the secondary cutter.

The primary cutter 12 defines a cutting area 16 and is configured to minimise wastage of the foodstuff and/or prevent clogging by aligning all parts of the foodstuff cut within the cutting area 16 with at least a portion of the guide arrangement into which the cut foodstuff passes. As a result, all of the foodstuff cut within the cutting area passes into the guide arrangement 11 and is thereafter processed by the secondary cutter 14, resulting in minimal wastage and preventing cut portions of foodstuff clogging any portion of the apparatus 10.

The guide arrangement 11 has a plurality of guide tubes 17, each guide tube 17 having a portion 18 of the primary cutter 12 located at an open first end 13, the portion 18 of the primary cutter 12 defining an opening for allowing passage of cut foodstuff into the open end 13 of the guide tubes 17.

A portion 18 of the primary cutter 12 is aligned with and projects from the periphery of the first end 13 of each guide tube 17. As each guide tube 17 has a portion 18 of primary cutter 12 aligned around its periphery, any foodstuff forced towards the guide tube 17 will be cut by the portion 18 of the primary cutter 12 aligned therewith and will resultantly pass into the guide tube 17. The primary cutter 12 comprises a tessellated arrangement of cutting members 18, each cutting member forming the portion 18 of the overall primary cutter 12 aligned around each guide tube 17. In a preferred embodiment as shown in the drawings, the primary cutter 12 comprises a tessellated arrangement of hexagonal cutting members 18. It should be noted that a person skilled in art would be aware that a tessellated arrangement could be formed from any shape suitable for tessellation. Moreover, the shapes forming the tessellated arrangement can be uniformly shaped and sized, or of non-uniform shapes and sizes which combine to form a tessellated arrangement, or a combination of some uniform and some non-uniform shapes. The tessellated nature of the primary cutter 12 results in a cutting arrangement providing guide tube apertures 19 aligned with the opening of the guide tubes 17, but having no gaps between these guide tube apertures 19. As foodstuff is forced onto the primary cutter 12, all of the foodstuff is cut and passed into one or more of the guide tubes 17. As no gaps exist between the tessellated arrangement of cutting members 18, wastage and clogging is greatly reduced or eliminated.

Each of the guide tubes 17 comprises a cutting member 18 of the primary cutting means projecting therefrom. Some of the cutting members 18 have at least one shared wall 20 which is shared by at least one adjacent cutting member 18. The cutting members 18 have a cutting end 21 locatable distal the end of the cutting members 18 closest the guide tube 17, the cutting members 18 adjoining at their cutting end 21 to form the shared walls 20 and thus form a tessellated cutting arrangement.

In one embodiment of the invention, as shown in the drawings, the cutting members 18 are formed integrally of a portion 22 of the guide tubes 17. In an alternative embodiment, the cutting members 18 may be attached to the guide tubes 17.

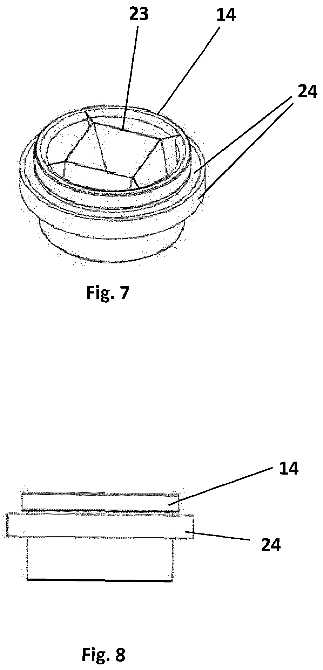

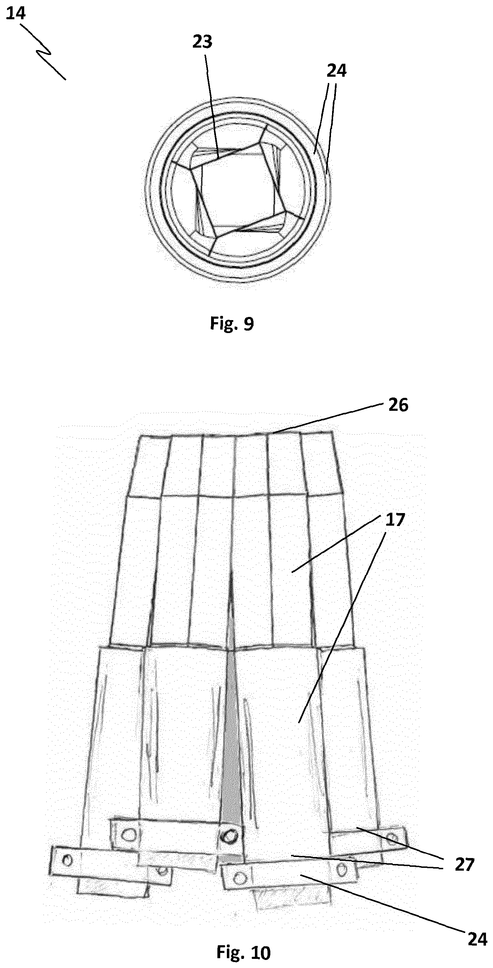

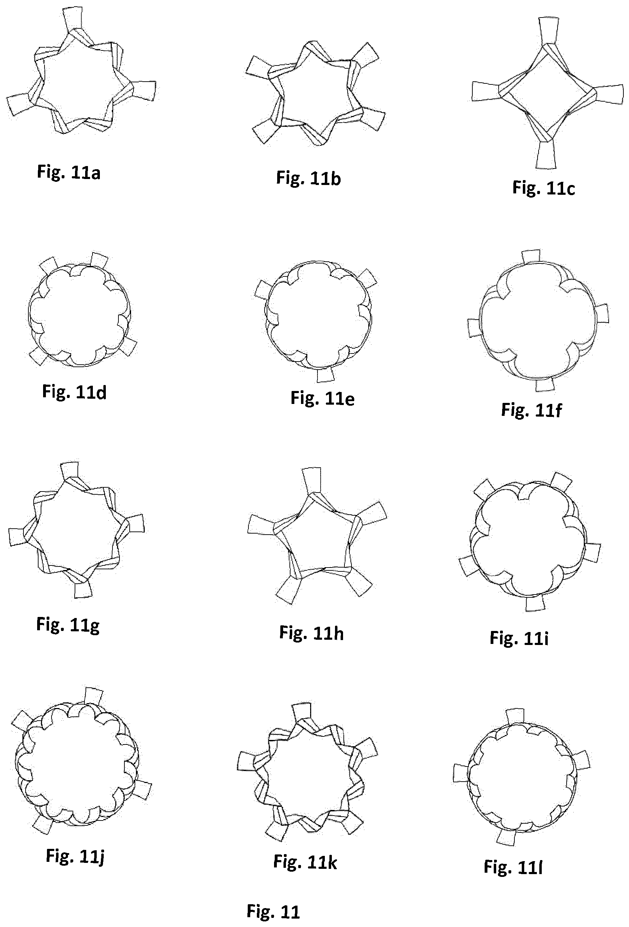

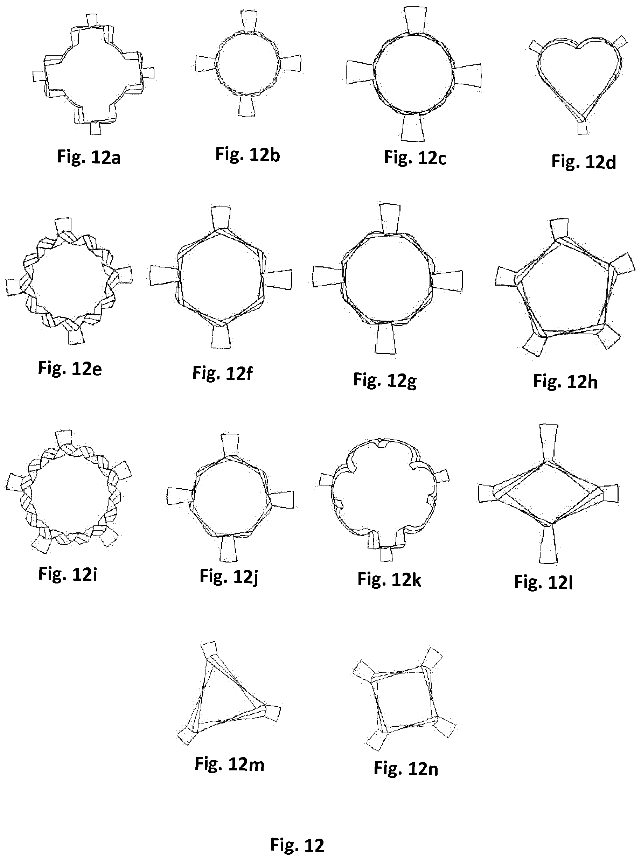

Each guide tube 17 has its own secondary cutter 14, the secondary cutter 14 having a blade arrangement 23 for cutting the foodstuff such that the foodstuff is shaped to a predetermined shape. In the embodiment shown in the drawings, and referring particularly to figures 8 and 10, the blade arrangement 23 is shaped to form a twisted rectangular cuboid from the foodstuff passed therethrough. However, it should be appreciated that the shape of the blade arrangement 23 of the secondary cutter 14 can be configured to create any shape from the foodstuff desired by a user. Examples of various shapes which the blade arrangement may take are illustrated in figures 11 and 12. The secondary cutter 14 can also be an interchangeable secondary cutter such that different secondary cutters 14 can be removably attached to the apparatus 10 in order to create different predetermined shapes from the foodstuff.

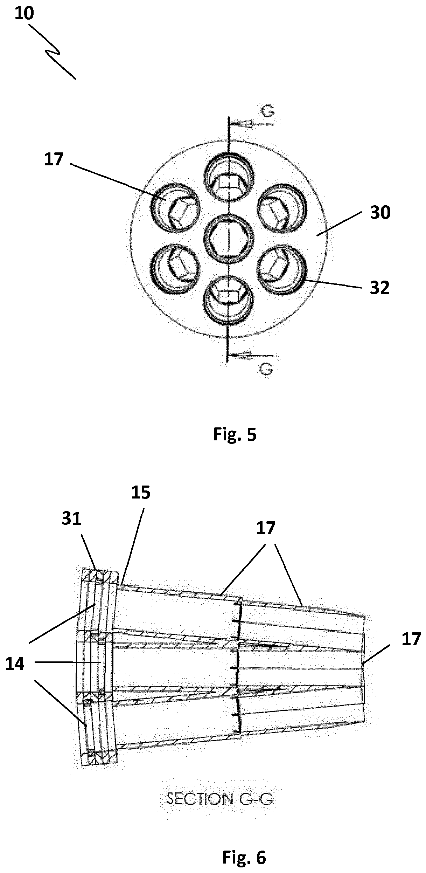

The secondary cutter 14 is a rotatable cutter operably mounted within a bearing 24, the bearing 24 being configured to permit rotation of the secondary cutter 14. The bearing 24 and secondary cutter 14 are operably mountable within end plates 30. The end plates 30 are located at the second end of the guide tubes 17 and each bearing 24 is mountable within a throughbore 32 formed in an end plate 30, the multiple end plates forming a layered end plate arrangement. The mounting of the bearings 24 forms a staggered or misaligned mounting arrangement within the layered end plate arrangement 31, as best viewed in figure 6. The staggered nature or misalignment of the secondary cutters allows the bearings 24 and associated secondary cutters 14 to be positioned in their desired location given their diameter, the length of the guide tube 17, and the divergence of the guide tubes 17 from one another.

The guide tubes 17 diverge at an angle from their first ends 13 closest the primary cutter 12 towards their second ends 15 closest the secondary cutter. The first ends of the guide tubes 17 adjoin at the cutting end 21 of the primary cutter 12 and the second ends 15 of the guide tubes 17 are separated from each other. The divergence of the guide tubes 17 and resulting separation at their second ends 15 provides sufficient space between the guide tubes 17 at their second ends 15 such that a secondary cutter 14, with associated bearing 24, can be mounted to each guide tube 17. In addition, whilst the separation created by the divergence of the guide tubes 17 permits space for mounting the secondary cutter 14, with associated bearing 24, it also permits the apparatus to maintain a minimal overall size as at least the first end 13 can still have a compact cross-sectional area. In an alternative embodiment not shown in the drawings, the bearing and secondary cutting means may be locatable entirely within the guide tubes.

In the embodiment shown in figure 10, the guide tubes 17 differ in length. The guide tubes 17 are generally aligned and adjoined at their first end 26, and any differences in length of the guide tubes 17 results in a staggered arrangement at the second ends 27 of the guide tubes 17. The length of each guide tube 17 and/or spacing between the guide tubes 17 at their second ends 27 is configured to accommodate the mounting of a bearing 24 thereto whilst maintaining a minimal cross-sectional area at the second end of the apparatus 10.

The secondary cutters 14 are driven by the foodstuff as the foodstuff is forced through the secondary cutting means. The secondary cutter 14 has a blade arrangement 23 having sweep and/or taper which encourages movement of the foodstuff through the cutting blade by encouraging rotation of the blade arrangement 23 as the foodstuff passes through the cutting blade. Alternatively or in combination, the sweep and/or taper of the blade arrangement 23 may encourage rotation of the foodstuff as the foodstuff passes through the cutting blade. In an alternative embodiment, the secondary cutters 14 are driven by a drive motor (not shown).

The apparatus 10 may be incorporated into a piece of food processing plant or machinery and form a step in a wider cutting and/or processing process.

In use, the foodstuff is forced onto the primary cutter 12 which cuts the foodstuff and transfers each cut section into a guide tube 17. As each portion of the primary cutter 12 is aligned with a guide tube 17 due to the tessellated arrangement of the primary cutter 12, all of the cut foodstuff will be transferred to a guide tube 17. The guide tube 17 guides the cut foodstuff towards and into contact with the secondary cutter 14. The cut foodstuff travels through the rotating secondary cutter 14 which cuts/shapes the foodstuff further to create a predefined shape and size.

A method of cutting a foodstuff comprises forcing the foodstuff through the primary cutter 12 such that the cut foodstuff is sized for passing into the guide tubes 17, encouraging the cut foodstuff to travel along the guide tubes 17 and into contact with a secondary cutter 14 such that the cut foodstuff is further cut and/or processed and/or shaped by the secondary cutter 14.

## Claims

1. A food processing apparatus (10) for the cutting of foodstuff comprising:
a guide (11) having an open first end (13) and a second end;
a primary cutter (12) located at or proximal the open first end (13) of the guide (11) and;
at least one secondary cutter (14) located at or proximal the second end of the guide (11), distal the first end (13);
wherein the guide (11) is configured to guide foodstuff cut by the primary cutter (12) towards and into contact with the at least one secondary cutter (14) for further cutting and/or processing by the at least one secondary cutter (14) such that the foodstuff passed through the at least one secondary cutter (14) is shaped to a predetermined shape,
wherein the secondary cutter (14) is arranged to rotate relative to the primary cutter (12),
wherein the at least one secondary cutter (14) comprises a cutting blade (23),
wherein the blade (23) of the at least one secondary cutter (14) is configured for cutting the foodstuff such that the foodstuff is shaped to the predetermined shape,
wherein the cutting blade (23) has a taper and/or sweep that is configured to encourage the foodstuff to move through the at least one secondary cutter (14) and to encourage rotation of the cutting blade (23), the at least one secondary cutter (14) being rotatably driven by the foodstuff as the foodstuff is forced through the at least one secondary cutter (14).

2. A food processing apparatus according to claim 1, wherein the primary cutter (12) is configured to cut the foodstuff such that it is sized to pass into the guide (11).

3. A food processing apparatus according to claim 1, wherein the primary cutter (12) defines a cutting area (16) and is configured to minimise wastage of the foodstuff and/or prevent clogging by aligning all parts of the foodstuff cut within the cutting area with at least a portion of the guide (11) into which the cut foodstuff passes.

4. A food processing apparatus according to claim 1, wherein the guide (11) comprises a plurality of guide members (17), each guide member (17) having at least a portion of the primary cutter (12) located at its first end (13), optionally wherein the guide members (17) each comprise a tube, pipe, or other such conduit suitable for conveying foodstuff.

5. A food processing apparatus according to claim 4, wherein at least a portion (18) of the primary cutter (12) is aligned with and projects from the periphery of the open first end (13) of each guide member (17).

6. A food processing apparatus according to claim 1, wherein the primary cutter (12) comprises a tessellated arrangement of cutting members (18), optionally wherein each of the guide members (17) comprises a cutting member (18) of the primary cutter (12) projecting therefrom, the cutting members (18) adjoining at least at a cutting end to form a tessellated cutting arrangement.

7. A food processing apparatus according to claim 1, wherein the primary cutter (12) cuts the foodstuff such that it is a suitable size and/or shape for further cutting and/or processing by the rotatable secondary cutter (14).

8. A food processing apparatus according to claim 4, wherein each guide member (17) comprises its own secondary cutter (14), optionally wherein the respective secondary cutters (14) are located within, attached to, or mounted on the second end of the guide members (17).

9. A food processing apparatus according to claim 8, wherein each secondary cutter (14) is mounted within a mounting plate (30), the mounting plates (30) forming a layered mounting plate arrangement (31).

10. A food processing apparatus according to claim 1, wherein the at least one secondary cutter (14) comprises a bearing (24), the cutting blade (23) being operably mounted within the bearing (24), the bearing (24) being configured to permit the rotation of the cutting blade (23).

11. A food processing apparatus according to claim 4, wherein the guide members (17) extend in a diverging manner from their first ends (13) closest the primary cutter (12) towards their second ends (15) closest the secondary cutter (14) such that at least a portion of the first ends (13) of the guide members (17) are adjoining and the second ends (15) of the guide members (17) are separated from each other and/or wherein at least some of the guide members (17) differ in length from each other.

12. A method of cutting a foodstuff comprising forcing the foodstuff through a primary cutter (12) such that the cut foodstuff is sized for passing into a guide (11), encouraging the cut foodstuff to travel along the guide (11) and into contact with at least one secondary cutter (14) such that the cut foodstuff is further cut and/or processed and/or shaped by the at least one secondary cutter (14),
wherein the secondary cutter (14) is arranged to rotate relative to the primary cutter (12),
wherein the at least one secondary cutter (14) comprises a cutting blade (23) having a taper and/or sweep that is configured to encourage the foodstuff to move through the at least one secondary cutter (14) and to encourage rotation of the cutting blade (23), the at least one secondary cutter (14) being rotatably driven by the foodstuff as the foodstuff is forced through the at least one secondary cutter (14).

## Patentansprüche

1. Lebensmittelverarbeitungsvorrichtung (10) zum Schneiden von Lebensmittel, die Folgendes umfasst:
eine Führung (11) mit einem offenen ersten Ende (13) und einem zweiten Ende;
einen primären Cutter (12), der sich an oder nahe dem offenen ersten Ende (13) der Führung (11) befindet; und
mindestens einen sekundären Cutter (14), der sich an oder nahe dem zweiten Ende der Führung (11), distal vom ersten Ende (13), befindet;
wobei die Führung (11) zum Führen von durch den primären Cutter (12) geschnittenem Lebensmittel zu und in Kontakt mit dem mindestens einen sekundären Cutter (14) zum weiteren Schneiden und/oder Verarbeiten durch den mindestens einen sekundären Cutter (14) konfiguriert ist, so dass das durch den mindestens einen sekundären Cutter (14) geleitete Lebensmittel in eine vorbestimmte Form gebracht wird,
wobei der sekundäre Cutter (14) zum Drehen relativ zum primären Cutter (12) ausgelegt ist,
wobei der mindestens eine sekundäre Cutter (14) eine Schneidklinge (23) umfasst,
wobei die Klinge (23) des mindestens einen sekundären Cutters (14) zum Schneiden des Lebensmittels so konfiguriert ist, dass das Lebensmittel in die vorbestimmte Form gebracht wird,
wobei die Schneidklinge (23) eine Verjüngung und/oder eine Krümmung aufweist, die konfiguriert ist zum Fördern einer Bewegung des Lebensmittels durch den mindestens einen sekundären Cutter (14) und zum Fördern einer Drehung der Schneidklinge (23), wobei der mindestens eine sekundäre Cutter (14) durch das Lebensmittel in Drehung versetzt wird, wenn das Lebensmittel durch den mindestens einen sekundären Cutter (14) gedrückt wird.

2. Lebensmittelverarbeitungsvorrichtung nach Anspruch 1, wobei der primäre Cutter (12) konfiguriert ist zum Schneiden des Lebensmittels so, dass es in die Führung (11) passt.

3. Lebensmittelverarbeitungsvorrichtung nach Anspruch 1, wobei der primäre Cutter (12) einen Schneidbereich (16) definiert und zum Minimieren von Lebensmittelverschwendung und/oder zum Verhindern von Verstopfung durch Ausrichten aller Teile des innerhalb des Schneidbereichs geschnittenen Lebensmittels mit mindestens einem Abschnitt der Führung (11), in die das geschnittene Lebensmittel gelangt, konfiguriert ist.

4. Lebensmittelverarbeitungsvorrichtung nach Anspruch 1, wobei die Führung (11) mehrere Führungselemente (17) umfasst, wobei sich am ersten Ende (13) jedes Führungselements (17) mindestens einen Teil des primären Cutters (12) befindet, wobei die Führungselemente (17) optional jeweils einen Schlauch, ein Rohr oder eine andere derartige Leitung umfassen, die zum Befördern von Lebensmittel geeignet ist.

5. Lebensmittelverarbeitungsvorrichtung nach Anspruch 4, wobei mindestens ein Teil (18) des primären Cutters (12) mit dem Umfang des offenen ersten Endes (13) jedes Führungselements (17) ausgerichtet ist und daraus vorsteht.

6. Lebensmittelverarbeitungsvorrichtung nach Anspruch 1, wobei der primäre Cutter (12) eine tessellierte Anordnung von Schneidelementen (18) umfasst, wobei optional von jedem der Führungselemente (17) ein Schneidelement (18) des primären Cutters (12) vorsteht, wobei die Schneidelemente (18) zumindest an einem Schneideende aneinander angrenzen, um eine tessellierte Schneidanordnung zu bilden.

7. Lebensmittelverarbeitungsvorrichtung nach Anspruch 1, wobei der primäre Cutter (12) das Lebensmittel so schneidet, dass es eine geeignete Größe und/oder Form zum weiteren Schneiden und/oder Verarbeiten durch den drehbaren sekundären Cutter (14) aufweist.

8. Lebensmittelverarbeitungsvorrichtung nach Anspruch 4, wobei jedes Führungselement (17) einen eigenen sekundären Cutter (14) umfasst, wobei sich die jeweiligen sekundären Cutter (14) optional innerhalb des zweiten Endes der Führungselemente (17) befinden, daran befestigt oder daran montiert sind.

9. Lebensmittelverarbeitungsvorrichtung nach Anspruch 8, wobei jeder sekundäre Cutter (14) innerhalb einer Montageplatte (30) montiert ist, wobei die Montageplatten (30) eine geschichtete Montageplattenanordnung (31) bilden.

10. Lebensmittelverarbeitungsvorrichtung nach Anspruch 1, wobei der mindestens eine sekundäre Cutter (14) ein Lager (24) umfasst, wobei die Schneidklinge (23) operativ innerhalb des Lagers (24) montiert ist, wobei das Lager (24) so konfiguriert ist, dass es die Drehung der Schneidklinge (23) zulässt.

11. Lebensmittelverarbeitungsvorrichtung nach Anspruch 4, wobei sich die Führungselemente (17) von ihren dem primären Cutter (12) am nächsten liegenden ersten Enden (13) zu ihren dem sekundären Cutter (14) am nächsten liegenden zweiten Enden (15) divergierend erstrecken, so dass mindestens die ersten Enden (13) der Führungselemente (17) zum Teil aneinander angrenzen und die zweiten Enden (15) der Führungselemente (17) voneinander getrennt sind, und/oder wobei mindestens einige der Führungselemente (17) sich in ihrer Länge voneinander unterscheiden.

12. Verfahren zum Schneiden eines Lebensmittels, das das Drücken des Lebensmittels durch einen primären Cutter (12) umfasst, so dass das geschnittene Lebensmittel zum Passieren in eine Führung (11) bemessen ist, wobei eine Bewegung des geschnittenen Lebensmittels entlang der Führung (11) und in Kontakt mit mindestens einem sekundären Cutter (14) gefördert wird, so dass das geschnittene Lebensmittel durch den mindestens einen sekundären Cutter (14) weiter geschnitten und/oder verarbeitet und/oder geformt wird,
wobei der sekundäre Cutter (14) relativ zum primären Cutter (12) drehbar angeordnet ist,
wobei der mindestens eine sekundäre Cutter (14) eine Schneidklinge (23) mit einer Verjüngung und/oder einer Krümmung aufweist, die konfiguriert ist zum Fördern einer Bewegung des Lebensmittels durch den mindestens einen sekundären Cutter (14) und zum Fördern der Drehung der Schneidklinge (23), wobei der mindestens eine sekundäre Cutter (14) durch das Lebensmittel in Drehung versetzt wird, wenn das Lebensmittel durch den mindestens einen sekundären Cutter (14) gedrückt wird.

## Revendications

1. Appareil de transformation d'aliments (10) pour effectuer la coupe de produits alimentaires comprenant :
un guide (11) ayant une première extrémité ouverte (13) et une deuxième extrémité ;
un dispositif de coupe primaire (12) situé au niveau de ou à proximité de la première extrémité ouverte (13) du guide (11) et ;
au moins un dispositif de coupe secondaire (14) situé au niveau de ou à proximité de la deuxième extrémité du guide (11), distale de la première extrémité (13) ;
où le guide (11) est configuré pour guider le produit alimentaire coupé par le dispositif de coupe primaire (12) vers et en contact avec l'au moins un dispositif de coupe secondaire (14) pour une coupe et/ou une transformation ultérieure par l'au moins un dispositif de coupe secondaire (14) de telle sorte que le produit alimentaire ayant passé à travers l'au moins un dispositif de coupe secondaire (14) soit façonné suivant une forme prédéterminée,
où le dispositif de coupe secondaire (14) est agencé pour tourner relativement au dispositif de coupe primaire (12),
où l'au moins un dispositif de coupe secondaire (14) comprend une lame de coupe (23),
où la lame (23) de l'au moins un dispositif de coupe secondaire (14) est configuré pour couper le produit alimentaire de telle sorte que le produit alimentaire soit façonné suivant la forme prédéterminée,
où la lame de coupe (23) a un effilement et/ou un élément de dégagement qui est configuré pour encourager le produit alimentaire à se déplacer à travers l'au moins un dispositif de coupe secondaire (14) et pour encourager la rotation de la lame de coupe (23), l'au moins un dispositif de coupe secondaire (14) étant entraîné de manière rotative par le produit alimentaire au fur et à mesure que le produit alimentaire est forcé à travers l'au moins un dispositif de coupe secondaire (14).

2. Appareil de transformation d'aliments selon la revendication 1, où le dispositif de coupe primaire (12) est configuré pour couper le produit alimentaire de telle sorte qu'il soit dimensionné pour passer dans le guide (11).

3. Appareil de transformation d'aliments selon la revendication 1, où le dispositif de coupe primaire (12) définit une zone de coupe (16) et est configuré pour minimiser les déchets du produit alimentaire et/ou pour empêcher une obstruction grâce à l'alignement de toutes les parties du produit alimentaire coupé au sein de la zone de coupe avec au moins une portion du guide (11) dans laquelle passe le produit alimentaire coupé.

4. Appareil de transformation d'aliments selon la revendication 1, où le guide (11) comprend une pluralité d'éléments de guidage (17), chaque élément de guidage (17) ayant au moins une portion du dispositif de coupe primaire (12) qui est située au niveau de sa première extrémité (13), facultativement où les éléments de guidage (17) comprennent chacun un tube, une tubulure, ou autre conduit similaire convenant à l'acheminement d'un produit alimentaire.

5. Appareil de transformation d'aliments selon la revendication 4, où au moins une portion (18) du dispositif de coupe primaire (12) est alignée avec et fait saillie depuis la périphérie de la première extrémité ouverte (13) de chaque élément de guidage (17).

6. Appareil de transformation d'aliments selon la revendication 1, où le dispositif de coupe primaire (12) comprend un agencement tesselé d'éléments de coupe (18), facultativement où chacun des éléments de guidage (17) comprend un élément de coupe (18) du dispositif de coupe primaire (12) faisant saillie à partir de celui-ci, les éléments de coupe (18) étant contigus au moins au niveau d'une extrémité de coupe pour former un agencement de coupe tesselé.

7. Appareil de transformation d'aliments selon la revendication 1, où le dispositif de coupe primaire (12) coupe le produit alimentaire de telle sorte qu'il ait une taille et/ou une forme appropriée pour une coupe et/ou une transformation ultérieure par le dispositif de coupe secondaire rotatif (14).

8. Appareil de transformation d'aliments selon la revendication 4, où chaque élément de guidage (17) comprend son propre dispositif de coupe secondaire (14), facultativement où les dispositifs de coupe secondaires respectifs (14) sont situés au sein de, attachés à, ou montés sur la deuxième extrémité des éléments de guidage (17).

9. Appareil de transformation d'aliments selon la revendication 8, où chaque dispositif de coupe secondaire (14) est monté au sein d'une plaque de montage (30), les plaques de montage (30) formant un agencement de plaques de montage superposées (31).

10. Appareil de transformation d'aliments selon la revendication 1, où l'au moins un dispositif de coupe secondaire (14) comprend un palier (24), la lame de coupe (23) étant montée de manière fonctionnelle au sein du palier (24), le palier (24) étant configuré pour permettre la rotation de la lame de coupe (23).

11. Appareil de transformation d'aliments selon la revendication 4, où les éléments de guidage (17) s'étendent suivant une manière divergente à partir de leurs premières extrémités (13) situées les plus proches du dispositif de coupe primaire (12) vers leurs deuxièmes extrémités (15) situées les plus proches du dispositif de coupe secondaire (14) de telle sorte qu'au moins une portion des premières extrémités (13) des éléments de guidage (17) soient contiguës et que les deuxièmes extrémités (15) des éléments de guidage (17) soient séparées les unes des autres et/ou où au moins certains des éléments de guidage (17) diffèrent en longueur l'un par rapport à l'autre.

12. Procédé de coupe d'un produit alimentaire comprenant le fait de forcer le produit alimentaire à travers un dispositif de coupe primaire (12) de telle sorte que le produit alimentaire coupé soit dimensionné pour passer dans un guide (11), le fait d'encourager le produit alimentaire coupé à se déplacer le long du guide (11) et en contact avec au moins un dispositif de coupe secondaire (14) de telle sorte que le produit alimentaire coupé soit coupé et/ou transformé et/ou façonné ultérieurement par l'au moins un dispositif de coupe secondaire (14),
où le dispositif de coupe secondaire (14) est agencé pour tourner relativement au dispositif de coupe primaire (12),
où l'au moins un dispositif de coupe secondaire (14) comprend une lame de coupe (23) ayant un effilement et/ou un élément de dégagement qui est configuré pour encourager le produit alimentaire à se déplacer à travers l'au moins un dispositif de coupe secondaire (14) et pour encourager la rotation de la lame de coupe (23), l'au moins un dispositif de coupe secondaire (14) étant entraîné de manière rotative par le produit alimentaire au fur et à mesure que le produit alimentaire est forcé à travers l'au moins un dispositif de coupe secondaire (14).
